(19) Europäisches Patentamt
European Patent Office
Office européen des brevets

(11) EP 4 755 193 A1

(12) **EUROPEAN PATENT APPLICATION**
published in accordance with Art. 153(4) EPC

(43) Date of publication:
**10.06.2026 Bulletin 2026/24**

(21) Application number: **24849254.8**

(22) Date of filing: **01.08.2024**

(51) International Patent Classification (IPC):
*A23B 7/04* (2006.01)    *A23B 7/055* (2006.01)
*A23L 19/00* (2016.01)

(52) Cooperative Patent Classification (CPC):
**A23B 7/04; A23B 7/055; A23L 19/00**

(86) International application number:
**PCT/JP2024/027542**

(87) International publication number:
**WO 2025/028609 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **01.08.2023 JP 2023125832**

(71) Applicant: **Nissui Corporation
Tokyo 105-8676 (JP)**

(72) Inventors:
• **VIRIYARATTANASAK Chotika
Hachioji-shi, Tokyo 192-0991 (JP)**

• **TAKEMURA Yuji
Hachioji-shi, Tokyo 192-0991 (JP)**
• **HASE Kanako
Hachioji-shi, Tokyo 192-0991 (JP)**
• **TANIGUCHI Sana
Hachioji-shi, Tokyo 192-0991 (JP)**
• **HASHIMOTO Tomoko
Hachioji-shi, Tokyo 192-0991 (JP)**

(74) Representative: **Mewburn Ellis LLP
Aurora Building
Counterslip
Bristol BS1 6BX (GB)**

(54) **METHOD FOR PRODUCING FROZEN BROCCOLI OR FROZEN CAULIFLOWER, AND METHOD FOR IMPROVING TEXTURE OF FROZEN BROCCOLI OR FROZEN CAULIFLOWER**

(57)    The present disclosure provides a method for producing frozen broccoli or frozen cauliflower, including a step of curing post-harvest broccoli or cauliflower before freezing the post-harvest broccoli or cauliflower, in which, for example, a combination of temperature and time in the curing is any one of the following (A) to (C): (A) a temperature of 10°C or higher and lower than 15°C, and a time of 96 hours or longer and 192 hours or shorter; (B) a temperature of 15°C or higher and lower than 25°C, and a time of 12 hours or longer and 96 hours or shorter; or (C) a temperature of 25°C or higher and lower than 40°C, and a time of 3 hours or longer and 48 hours or shorter; or a method for improving texture of frozen broccoli or frozen cauliflower including a step of curing post-harvest broccoli or cauliflower before freezing the post-harvest broccoli or cauliflower; and frozen broccoli having a total pectin content of 11.0 mass% or more.

**Description**

Technical Field

The present disclosure relates to, for example, a method for producing frozen broccoli or frozen cauliflower and a method for improving texture of frozen broccoli or frozen cauliflower.

Background Art

Many frozen vegetables are produced through a blanching step and a freezing step. The blanching step is a step of heating vegetables before the freezing step. By the blanching step, effects such as improvement of freezing resistance of vegetables, suppression of discoloration of vegetables due to deactivation of enzymes, and sterilization of vegetables are obtained. Meanwhile, frozen vegetables may have a softer texture than fresh vegetables due to changes in pectin caused by heating during the blanching step, cell destruction caused by generation of ice crystals during the freezing step, and the like.

Among frozen vegetables, frozen broccoli is a popular vegetable because of its high versatility for various menus and high nutritional value. Frozen cauliflower is a vegetable that is highly versatile for various menus similarly to frozen broccoli, and is also becoming popular as a substitute for rice. The broccoli and cauliflower are cultivated plants native to the Mediterranean area, and their flower buds and stems are used for food. As for broccoli and cauliflower generally distributed in Japan, there are broccoli and cauliflower which are seeded in spring and harvested around summer (spring crop) and broccoli and cauliflower which are seeded in summer and harvested around winter (fall and winter crop). Various varieties are cultivated in accordance with climatic conditions such as cool places, common places, and warm places. An appropriate growth temperature is approximately 15°C to 25°C, and poor growth is often observed at 5°C or lower and 25°C or higher. Regarding broccoli, there is a report of studying a freezing method (Non Patent Literature 1) and there is a report of studying a blanching method (Non Patent Literature 2). However, there is still room for improvement in the texture of frozen broccoli. Similarly to the frozen broccoli, frozen cauliflower is also required to have an improved texture.

Document List

Non Patent Literatures

Non Patent Literature 1: "Ultrasound assisted immersion freezing of broccoli (Brassica oleracea L. var. botrytis L.)", Ultrasonics Sonochemistry, September 2014, Volume 21, Issue 5, p. 1728-1735

Non Patent Literature 2: "The effect of thermal processing on sensory properties, texture attributes, and pectic changes in broccoli", Czech Journal of Food Sciences, 2015, Volume 33, Issue 3, p. 254-260

Summary of Invention

Technical Problem

An object of the present disclosure is to improve the texture of frozen broccoli or frozen cauliflower.

Solution to Problem

The method for producing frozen broccoli or frozen cauliflower or the method for improving texture of frozen broccoli or frozen cauliflower of the present disclosure includes a step of curing post-harvest broccoli or cauliflower.

Description of Embodiments

[Method for Producing Frozen Broccoli or Frozen Cauliflower]

The method for producing frozen broccoli or frozen cauliflower of the present disclosure includes a step of curing post-harvest broccoli or cauliflower before freezing the post-harvest broccoli or cauliflower (hereinafter, also simply referred to as "curing step").

(Broccoli or Cauliflower)

In an embodiment, broccoli or cauliflower being a raw material may be broccoli or cauliflower harvested on a harvest date on which a mean of average temperatures for 4 days before harvest including the harvest date is 20°C or lower, 15°C or lower, 12°C or lower, or 10°C or lower. In another embodiment, broccoli or cauliflower being a raw material may be broccoli or cauliflower harvested on a harvest date on which a mean of average temperatures for 4 days before harvest including the harvest date is 15°C or lower, 12°C or lower, or 10°C or lower. Here, the "average temperature" refers to a value obtained by summing up temperatures every hour from 1:00 to 24:00 in a certain day and dividing the sum by 24. The "mean of average temperatures for 4 days before harvest including the harvest date" refers to a value obtained by summing up the average temperatures of the harvest date, the day before the harvest date, two days before the harvest date, and three days before the harvest date, and dividing the sum by 4. Here, depending on the time of harvest on the harvest date, the post-harvest temperature will also be used for the above calculation, and the influence of the difference on the quality of the broccoli or cauliflower is within a negligible range.

In an embodiment, broccoli or cauliflower being a raw material may be broccoli or cauliflower harvested on a harvest date on which a mean of minimum temperatures for 4 days before harvest including the harvest date is 18°C or lower, 15°C or lower, 8°C or lower, 6°C or lower, or 5°C or lower. In another embodiment, broccoli or cauliflower being a raw material may be broccoli or cauliflower harvested on a harvest date on which a mean of minimum temperatures for 4 days before harvest including the harvest date is 8°C or lower, 6°C or lower, or 5°C or lower. Here, the "minimum temperature" refers to the lowest temperature in a certain day. The "mean of minimum temperatures for 4 days before harvest including the harvest date" refers to a value obtained by summing up minimum temperatures of the harvest date, the day before the harvest date, two days before the harvest date, and three days before the harvest date, and dividing the sum by 4. Here, depending on the time of harvest on the harvest date, the post-harvest temperature will also be used for the above calculation. Similarly to the average temperature, the influence of the difference on the quality of the broccoli or cauliflower is within a negligible range.

In an embodiment, broccoli or cauliflower being a raw material may be broccoli or cauliflower harvested in October, November, December, January, February, March, April, or May in Japan. In another embodiment, broccoli or cauliflower being a raw material may be broccoli or cauliflower harvested in October, November, December, January, February, or March in Japan. However, the broccoli or cauliflower being a raw material may be broccoli or cauliflower harvested at other times.

(Curing)

In the present disclosure, the "curing" refers to allowing broccoli or cauliflower to exist in an environment at a specific temperature for a specific period of time. Typically, in the curing, the harvested broccoli or cauliflower is allowed to exist in an environment at a higher temperature than the current temperature (outside temperature) for a specific period of time. The curing step may be performed while carrying the broccoli or cauliflower, or may be performed while storing the broccoli or cauliflower in a certain place. The curing step may be performed several times or may be performed at a time. When the curing step is performed several times, the time to be described later is a total time. The curing step may be performed while keeping the broccoli or the cauliflower stationary, or may be performed while moving the broccoli or cauliflower. Typically, the curing step is performed at once by keeping and storing the broccoli or cauliflower stationary in a fixed location.

Also, in the present disclosure, the curing refers to allowing the post-harvest broccoli or cauliflower to exist in an environment at a specific temperature for a specific period of time to an extent that the texture can be improved as compared to frozen broccoli or frozen cauliflower obtained by processing uncured broccoli or cauliflower. The improvement of the texture will be described in detail in [Method for Improving Texture of Frozen Broccoli or Frozen Cauliflower] described later.

In the method for producing frozen broccoli or frozen cauliflower of the present disclosure, a combination of temperature (hereinafter, also referred to as "curing temperature") and time (hereinafter, also referred to as "curing time") in the curing step can be, for example, any one of the following (A) to (C):

(A) a temperature of 10°C or higher and lower than 15°C, and a time of 75 hours or longer and 200 hours or shorter;
(B) a temperature of 15°C or higher and lower than 25°C, and a time of 5 hours or longer and 150 hours or shorter; and
(C) a temperature of 25°C or higher and lower than 40°C, and a time of 2 hours or longer and 100 hours or shorter.

The temperature of 10°C or higher and lower than 15°C defined as (A) above is a temperature slightly higher than 5°C at which poor growth of broccoli or cauliflower tends to be observed, and it is possible to cure broccoli or cauliflower that had been growing at a low temperature in a state where temperature rise stress is suppressed to a low level. When the combination of curing temperature and curing time is (A) as described above, the curing time may be 80 hours or longer, 90 hours or longer, or 100 hours or longer. Typically, the moderately longer the curing time, the more easily the effect of improving the texture of frozen broccoli or frozen cauliflower is obtained.

In addition, when the combination of curing temperature and curing time is (A) described above, the curing time may be long to the extent that an increase in bacteria and excessive growth or aging of broccoli or cauliflower do not become a problem. The curing time may be 180 hours or shorter, 160 hours or shorter, or 140 hours or shorter. Typically, a moderately shorter curing time tends to more easily suppress the increase in bacteria and the excessive growth or aging of broccoli or cauliflower, and to reduce costs.

The temperature of 15°C or higher and lower than 25°C defined as (B) above is a temperature highly suitable for cultivating broccoli or cauliflower, and the physiological function of the broccoli or the cauliflower tends to be exerted under low-stress conditions. When the combination of curing temperature and curing time is (B) as described above, the curing time may be 10 hours or longer, 15 hours or longer, 19 hours or longer, or 21 hours or longer. Typically, the moderately longer the curing time, the more easily the effect of improving the texture of frozen broccoli or frozen cauliflower is obtained.

In addition, when the combination of curing temperature and curing time is (B) described above, the curing time may be long to the extent that an increase in bacteria and excessive growth or aging of broccoli or cauliflower do not become a problem. The curing time may be 130 hours or shorter, 100 hours or shorter, 90 hours or shorter, 80 hours or shorter, 70 hours or shorter, 50 hours or shorter, or 30 hours or shorter. Typically, a moderately shorter curing time tends to more easily suppress the increase in bacteria and the excessive growth or aging of broccoli or cauliflower, and to reduce costs.

The temperature of 25°C or higher and lower than 40°C defined as (C) above is higher than an optimum temperature for growth of broccoli or cauliflower, and a high effect on broccoli or cauliflower cultivated at the optimum temperature for growth can also be expected. When the combination of curing temperature and curing time is (C) as described above, the curing time may be 4 hours or longer, 5 hours or longer, 8 hours or longer, 10 hours or longer, or 20 hours or longer. Typically, the moderately longer the curing time, the more easily the effect of improving the texture of frozen broccoli or frozen cauliflower is obtained. When the combination of curing temperature and curing time is (C) as described above, the curing temperature may be 38°C or lower, 36°C or lower, 34°C or lower, or 32°C or lower.

In addition, when the combination of curing temperature and curing time is (C) described above, the curing time may be long to the extent that an increase in bacteria and excessive growth or aging of broccoli or cauliflower doc not become a problem. The curing time may be 90 hours or shorter, 70 hours or shorter, 50 hours or shorter, 40 hours or shorter, or 30 hours or shorter. Typically, a moderately shorter curing time tends to more easily suppress the increase in bacteria and the excessive growth or aging of broccoli or cauliflower, and to reduce costs.

In an embodiment, the combination of curing temperature and curing time may be (B) as described above. In this case, the curing temperature may be 15°C or higher, 16°C or higher, 17°C or higher, or 18°C or higher. Typically, when the curing temperature is moderately high, the effect of improving the texture of frozen broccoli or frozen cauliflower is easily obtained, and the curing time is easily reduced. The curing temperature may be lower than 25°C, 24°C or lower, 23°C or lower, or 22°C or lower. Typically, a moderately lower curing temperature tends to more easily suppress the increase in bacteria and the excessive growth or aging of broccoli or cauliflower.

In the curing step, the curing temperature and the curing time may be determined in consideration of a value obtained by multiplying the curing temperature (°C) by the curing time (h) (hereinafter, also referred to as "cumulative temperature"). The cumulative temperature may be, for example, 100°C·h or more, 200°C·h or more, 300°C·h or more, or 400°C·h or more. Typically, a moderately greater cumulative temperature tends to more easily provide the effect of improving the texture of frozen broccoli or frozen cauliflower.

The cumulative temperature may be, for example, 1500°C·h or less, 1200°C·h or less, 1000°C·h or less, or 800°C·h or less. Typically, a moderately lower cumulative temperature tends to more easily suppress the increase in bacteria and the excessive growth or aging of broccoli or cauliflower, and to reduce costs.

The curing step may be performed in an air atmosphere, or may be performed under a humidified condition. When the curing step is performed in an air atmosphere, for example, the temperature of the air in a constant temperature oven, a constant temperature room, or the like for performing the curing step may be set to the curing temperature described above.

When the curing step is performed under a humidified condition, the humidified condition may be, for example, one of the following (1) or (2):

    (1) bringing broccoli or cauliflower into contact with water; or
    (2) disposing broccoli or cauliflower in a humidified space.

When the humidified condition is (1) as described above, examples of the method for bringing broccoli or cauliflower into contact with water include the following method (1-1) or (1-2):

    (1-1) a method for soaking cut surfaces of stems of broccoli or cauliflower in water; or

(1-2) a method for soaking broccoli or cauliflower in water by putting broccoli or cauliflower, or fragmented broccoli florets or fragmented cauliflower florets into a water tank, or the like.

When the method (1-1) is adopted, for example, the set temperature of a constant temperature oven or a constant temperature bath that contains water and air may be set to the curing temperature described above. When the method (1-2) is adopted, for example, the temperature of water may be set to the curing temperature described above. When the method (2) is adopted, the temperature of the humidified air in a constant temperature oven, a constant temperature room, or the like for performing the curing step may be set to the curing temperature described above. The "humidification" in the method (2) described above typically means that the humidity of the air in a space where the broccoli or cauliflower exists in the curing step is artificially increased by 10% or more with respect to the humidity of the air at that time.

When the humidified condition is (1) as described above, the water to be used may be a nutrient solution containing a nutrient. The nutrient may be, for example, a hydroponic fertilizer.

When the humidified condition is (1) as described above, a disinfectant may coexist with the water to be used. Typically, the use of the disinfectant tends to make it easier to suppress the growth of bacteria. The disinfectant is not particularly limited as long as it can be used for broccoli or cauliflower. It is possible to use, for example, at least one selected from the group consisting of sodium hypochlorite, hypochlorous acid, sodium chlorite, chlorous acid, peracetic acid, hydrogen peroxide, ethanol, and organic acid. In an embodiment, the disinfectant is sodium hypochlorite or organic acid. Here, examples of the organic acid include carboxylic acids such as acetic acid, citric acid, malic acid, lactic acid, fumaric acid, tartaric acid, succinic acid, and gluconic acid. In an embodiment, the disinfectant is sodium hypochlorite.

The disinfectant may be used by being dissolved in water, may be used by being dispersed in water, or may be used by being precipitated in water.

The curing step may be performed under light irradiation, or may be performed in a dark room.

(Blanching)

The method for producing frozen broccoli or frozen cauliflower of the present disclosure may include a step of blanching broccoli or cauliflower (hereinafter, also simply referred to as "blanching step"). The blanching step is a step of heating broccoli or cauliflower before the freezing step to be described later. The blanching step may be performed using water vapor, or may be performed by a method of heating in hot water. In the method of heating in hot water, for example, the heating may be performed with water at 80 to 100°C for 0.5 to 6 minutes. The heating time for heating in hot water may be 2 to 5.5 minutes or 3 to 5 minutes.

In an embodiment, the blanching step starts within 4 hours following the end of the curing step. The blanching step may start within 3 hours, 2 hours, 1 hour, or 30 minutes following the end of the curing step. Typically, in a case where the blanching step is started at an early time after the end of the curing step, it is easy to maintain the characteristics obtained by the curing step and to suppress the deterioration of the broccoli or cauliflower.

(Freezing)

The method for producing frozen broccoli or frozen cauliflower of the present disclosure typically has a step of freezing broccoli or cauliflower (hereinafter, also simply referred to as "freezing step"). The freezing step is a step of freezing broccoli or cauliflower subjected to the blanching step as necessary using a freezer, a quick freezer, or the like. The temperature during the freezing step may be, for example, 0°C or lower, -3°C or lower, -5°C or lower, -10°C or lower, or -20°C or lower.

In the method for producing frozen broccoli or frozen cauliflower of the present disclosure, when the blanching step is performed, the freezing step may be started within 4 hours, within 3 hours, within 2 hours, within 1 hour, within 30 minutes, within 20 minutes, or within 10 minutes following the end of the blanching step. Typically, in a case where the freezing step is started at an early time after the end of the blanching step, it is easy to maintain the characteristics obtained by the curing step and the blanching step and to suppress the deterioration of the broccoli or cauliflower.

In the method for producing frozen broccoli or frozen cauliflower of the present disclosure, when the blanching step is not performed, the freezing step may be started within 4 hours, within 3 hours, within 2 hours, within 1 hour, or within 30 minutes following the end of the curing step. Typically, in a case where the freezing step is started at an early time after the end of the curing step, it is easy to maintain the characteristics obtained by the curing step and to suppress the deterioration of the broccoli or cauliflower.

(Frozen Broccoli or Frozen Cauliflower)

In the present disclosure, the "frozen broccoli" refers to broccoli in which at least a part of moisture contained in the broccoli is frozen. In the present disclosure, the "frozen cauliflower " refers to cauliflower in which at least a part of moisture contained in the cauliflower is frozen. The temperature of the frozen broccoli or frozen cauliflower may typically be 0°C or lower, -3°C or lower, -5°C or lower, -10°C or lower, or -20°C or lower.

The frozen broccoli or frozen cauliflower obtained by the method for producing frozen broccoli or frozen cauliflower of the present disclosure typically has an improved texture as compared to frozen broccoli or frozen cauliflower produced by directly subjecting post-harvest broccoli or cauliflower to a blanching step and a freezing step. As one of the factors for achieving such an improved texture, there is a possibility that a response caused by the gene expression, physiological response, and/or cellular response occurring in the curing step is involved. In particular, the gene expression involved in cell wall biosynthesis may be changed. As a result, a change may occur in the constituents of the cell wall, and a change such as an increase in the total pectin content may occur. In particular, an interaction occurring when the curing step and the freezing process are combined can lead to a new change. Typically, the amount of the cell wall and the composition of the components constituting the cell wall are changed, and thus the texture is likely to be improved.

[Method for Improving Texture of Frozen Broccoli or Frozen Cauliflower]

The present disclosure also provides a method for improving texture of frozen broccoli or frozen cauliflower. The method for improving texture of frozen broccoli or frozen cauliflower of the present disclosure includes a step of curing post-harvest broccoli or cauliflower before freezing the post-harvest broccoli or cauliflower (curing step).

Here, the "improvement in texture of frozen broccoli or frozen cauliflower" typically refers to improvement in texture, when the frozen broccoli or frozen cauliflower is thawed, cooked as necessary, and eaten, as compared to conventional frozen broccoli or frozen cauliflower in at least one of the following aspects: (i) a moderate chewy texture (firmness) is felt; (ii) a crunchy texture is obtained; or (iii) less wateriness.

Whether or not the texture of the frozen broccoli or frozen cauliflower is improved can be relatively easily evaluated from the aspects (i) to (iii) described above, by sensory evaluation, for example, by comparing the conventional frozen broccoli or frozen cauliflower to the frozen broccoli or frozen cauliflower of the present disclosure.

Whether or not the texture of the frozen broccoli or frozen cauliflower is improved can also be evaluated by evaluation of physical properties. For example, the aspects: (i) a moderate chewy texture (firmness) is felt; and (ii) a crunchy texture is obtained can be evaluated by measuring the maximum load in the following manner. It is considered that a large value of the measured maximum load corresponds to an excellent chewy texture and an excellent crunchy texture when eaten.

Whether or not the texture of the frozen broccoli or frozen cauliflower is improved may be evaluated by how much the maximum load is changed as compared to the frozen broccoli or frozen cauliflower produced without being subjected to the curing step, that is, a maximum load change rate (%). The maximum load change rate may be 110% or more, 120% or more, 140% or more, 180% or more, or 200% or more. The larger the change rate, the larger the degree of improvement in texture.

The maximum load is, for example, a value measured in such a manner that a stem after natural thawing is diced with a kitchen knife such that each side is within a range of 3 to 5 mm, and 9 g of the diced stems is put into a cylindrical petri dish (manufactured by Taketomo Electric, LTD.) having an outer shape (outer dimension) with a diameter of 42 mm and a height of 13.5 mm, and having an inner side (inner dimension) with a diameter of 39 mm and a height of 12 mm (all actually measured values), and the stems are compressed with a 36 mm puncture probe (flat type, manufactured by Taketomo Electric, LTD.) at a compression speed of 1 mm/s and a compression rate of 40%. The maximum load can be measured using, for example, "TENSIPRESSER TTP-50BXII" manufactured by Taketomo Electric, LTD. Depending on the device, the maximum load may be obtained in units of "gw (or gf)/cm$^2$". For example, when the maximum load is measured to be 1000 gw (gf)/cm$^2$, the maximum load can be determined in terms of N as follows: 1000 gw (gf)/cm$^2$ $\times$ 10.1788 cm$^2$ $\times$ 0.0098 N/gw (gf) = 99.7522 N. Here, 10.1788 cm$^2$ used in the calculation is a measurement area of a probe with a diameter of 36 mm, and 0.0098 N/gw (gf) is a conversion rate from gw (gf) to N.

The above aspect (iii), less wateriness, can be evaluated, for example, by analyzing the drip loss in the following manner. A small drip loss is considered to correspond to less wateriness when eaten.

The drip loss can be evaluated, for example, in such a manner that stems are diced (cut into a substantially cubic shape) with a kitchen knife such that each side is within a range of 3 to 5 mm, 2 to 3 g of the diced samples are placed on filter paper and centrifuged at room temperature for 6 minutes under the condition of RCF = 300 ($\times$ g), and a ratio of the mass of moisture adhering to the filter paper and moisture remaining in the centrifuge tube with respect to the mass of the samples before centrifugation is calculated. As the centrifuge, for example, "Universal Refrigerated Centrifuge Model 5922" manufactured by KUBOTA Corporation Co., Ltd. can be used.

In an embodiment, the method for improving texture of frozen broccoli or frozen cauliflower of the present disclosure may be a method for improving texture of broccoli or cauliflower harvested on a harvest date on which a mean of average temperatures for 4 days before harvest including the harvest date is 20°C or lower, 15°C or lower, 12°C or lower, or 10°C or lower. In another embodiment, the method for improving texture of frozen broccoli or frozen cauliflower of the present disclosure may be a method for improving texture of broccoli or cauliflower harvested on a harvest date on which a mean of average temperatures for 4 days before harvest including the harvest date is 15°C or lower, 12°C or lower, or 10°C or lower. Here, for "average temperature", refer to the definition described in the above section "Method for Producing Frozen Broccoli or Frozen Cauliflower".

In an embodiment, the method for improving texture of frozen broccoli or frozen cauliflower of the present disclosure may be a method for improving texture of broccoli or cauliflower harvested on a harvest date on which a mean of minimum temperatures for 4 days before harvest including the harvest date is 18°C or lower, 15°C or lower, 8°C or lower, 6°C or lower, or 5°C or lower. In another embodiment, the method for improving texture of frozen broccoli or frozen cauliflower of the present disclosure may be a method for improving texture of broccoli or cauliflower harvested on a harvest date on which a mean of minimum temperatures for 4 days before harvest including the harvest date is 8°C or lower, 6°C or lower, or 5°C or lower. Here, for "minimum temperature", refer to the definition described in the above section "Method for Producing Frozen Broccoli or Frozen Cauliflower".

In an embodiment, the method for improving texture of frozen broccoli or frozen cauliflower of the present disclosure may be a method for improving texture of broccoli or cauliflower harvested in October, November, December, January, February, March, April, or May in Japan. In another embodiment, the method for improving texture of frozen broccoli or frozen cauliflower of the present disclosure may be a method for improving texture of broccoli or cauliflower harvested in October, November, December, January, February, or March in Japan. However, the method for improving texture of frozen broccoli or frozen cauliflower of the present disclosure may be a method for improving texture of broccoli or cauliflower harvested at other times.

(Curing, Blanching, and Freezing)

In the curing step, the conditions described in the above section on "Method for Producing Frozen Broccoli or Frozen Cauliflower" can be employed. The method for improving texture of frozen broccoli or frozen cauliflower of the present disclosure may include a step of blanching broccoli or cauliflower (blanching step) and a step of freezing broccoli or cauliflower (freezing step). In the blanching step and the freezing step, the conditions described in the above section on "Method for Producing Frozen Broccoli or Frozen Cauliflower" can be employed.

[Frozen Broccoli]

Also newly disclosed herein is frozen broccoli having a total pectin content of 11.0 mass% or more. The total pectin content of the frozen broccoli may be 11.4 mass% or more, 11.8 mass% or more, 12.2 mass% or more, 12.6 mass% or more, 13.0 mass% or more, 13.4 mass% or more, or 13.8 mass% or more. Such frozen broccoli is obtained by the production method or the texture improvement method of the present disclosure.

In addition, in the frozen broccoli according to the present disclosure, a broccoli as a raw material may have a total pectin content of less than 11.0 mass%, less than 10.6 mass%, or less than 10.4 mass%. Even when the total pectin content of the broccoli as a raw material is less than 11.0 mass%, the frozen broccoli having the total pectin content as described above tends to be more easily obtained by the production method or the texture improvement method of the present disclosure.

In an embodiment, a broccoli as a raw material may be broccoli harvested on a harvest date on which a mean of average temperatures for 4 days before harvest including the harvest date is 20°C or lower, 15°C or lower, 12°C or lower, or 10°C or lower. In another embodiment, a broccoli as a raw material may be broccoli harvested on a harvest date on which a mean of average temperatures for 4 days before harvest including the harvest date is 15°C or lower, 12°C or lower, or 10°C or lower. Also, in an embodiment, a broccoli as a raw material may be broccoli harvested on a harvest date on which a mean of minimum temperatures for 4 days before harvest including the harvest date is 18°C or lower, 15°C or lower, 8°C or lower, 6°C or lower, or 5°C or lower. In another embodiment, a broccoli as a raw material may be broccoli harvested on a harvest date on which a mean of minimum temperatures for 4 days before harvest including the harvest date is 8°C or lower, 6°C or lower, or 5°C or lower. Such a broccoli as a raw material typically tends to have a low total pectin content, but the production method or texture improvement method of the present disclosure makes it easier to obtain frozen broccoli having a total pectin content as described above. In an embodiment, a broccoli as a raw material may be broccoli or cauliflower harvested in October, November, December, January, February, March, April, or May in Japan. In another embodiment, a broccoli as a raw material may be broccoli or cauliflower harvested in October, November, December, January, February, or March in Japan.

In this specification, each specific matter described in an embodiment regarding each aspect of the present disclosure may be arbitrarily combined into a new embodiment, and such a new embodiment should also be understood as being included in each aspect of the present disclosure.

Examples

Hereinafter, the present disclosure will be described more specifically with reference to examples, but the present disclosure is not limited at all by these examples.

- Study on Broccoli 1

[Production of Frozen Broccoli]

(Obtaining Broccoli)

A plurality of heads of each of broccoli 1 to 4 shown in Table 1 below were obtained. Regarding all broccoli, the harvest date was within 5 days from the obtaining date, and each broccoli was harvested on a harvest date on which a mean of average temperatures for 4 days before harvest including the harvest date was 10°C or lower, and on which a mean of minimum temperatures for 4 days before harvest including the harvest date was 5°C or lower.

[Table 1]

| No. | Production area | Sample obtaining date | Bud diameter (cm) |
|---|---|---|---|
| Broccoli 1 | Japan | Mid-February 2023 | 15 $\pm$ 2 |
| Broccoli 2 | Japan | Mid-February 2023 | 12 $\pm$ 1 |
| Broccoli 3 | Japan | Early March 2023 | 13 $\pm$ 1 |
| Broccoli 4 | Japan | Late January 2023 | - |

(Curing Step)

The broccoli used in each example is shown in Table 2. For each example, 4 to 6 broccoli heads were used.

In Examples 1-1 to 1-6, 2-2, 2-3, and 2-6 to 2-11, by using a constant temperature oven (Low Temperature Incubator IN604, manufactured by Yamato Scientific Co., Ltd.) set to each temperature shown in Table 2, curing was performed for each of the times shown in Table 2 in a state where cut surfaces of broccoli stems were immersed in tap water. Here, since there is a possibility that the broccoli cut surfaces may have dried or the cut surface tissues may have aged, the broccoli cut surfaces were cut off by about 1 cm to obtain fresh cross sections, and the resultant cross sections were subjected to curing.

In Examples 1-7, 1-8, and 2-12, by using a constant temperature oven (Low Temperature Incubator IN604, manufactured by Yamato Scientific Co., Ltd.) set to each temperature shown in Table 2, curing was performed for each of the times shown in Table 2 in a state where cut surfaces of broccoli stems were immersed in a nutrient solution. The nutrient solution used was obtained by mixing a nutrient prepared from OAT house No. 1 (manufactured by Otsuka Agri Techno Co., Ltd.) using formula A (1500 g/L) and a nutrient prepared from OAT house No. 2 (manufactured by Otsuka Agri Techno Co., Ltd.) using formula A (1000 g/L) at a ratio of 1 : 1, diluting the mixture with tap water, adjusting the EC value to 1.6 dS/m, and adjusting the pH to 6.5 to 6.6 with a pH adjuster for hydroponic cultivation. In Example 1-8, curing was performed using lighting (LED system RCL1245, manufactured by Olympia Lighting Fixtures Industries, Ltd.) while irradiating with light under the conditions of a PPFD of 200 to 250 $\mu$mol/m$^2$/s and a light cycle of 16 h/day. In the examples except for Example 1-8, curing was performed in a dark place.

In Examples 1-9 and 2-13, broccoli was placed in a constant temperature oven (Low Temperature Incubator IN604, manufactured by Yamato Scientific Co., Ltd.) set to the temperature shown in Table 2, and cured in an air atmosphere for the time shown in Table 2.

Each cured broccoli was quickly processed into frozen broccoli by the procedure to be described later. In Examples 2-1, 2-4, and 2-5, curing was not performed, and each broccoli was processed into frozen broccoli by the procedure to be described later on the day of obtaining the broccoli.

[Table 2]

| | Sample No. | Temperature (°C) | Time (h) | Curing conditions |
|---|---|---|---|---|
| Example 1-1 | Broccoli 1 | 20 | 72 | Water |
| Example 1-2 | Broccoli 2 | 20 | 24 | Water |

(continued)

| | Sample No. | Temperature (°C) | Time (h) | Curing conditions |
|---|---|---|---|---|
| Example 1-3 | Broccoli 2 | 20 | 48 | Water |
| Example 1-4 | Broccoli 2 | 30 | 5 | Water |
| Example 1-5 | Broccoli 2 | 30 | 24 | Water |
| Example 1-6 | Broccoli 3 | 10 | 120 | Water |
| Example 1-7 | Broccoli 4 | 20 | 72 | Water (nutrient solution) |
| Example 1-8 | Broccoli 4 | 20 | 72 | Water (nutrient solution) + light |
| Example 1-9 | Broccoli 4 | 20 | 72 | Air |
| Example 2-1 | Broccoli 1 | - | - | No curing |
| Example 2-2 | Broccoli 1 | 2 | 72 | Water |
| Example 2-3 | Broccoli 1 | 10 | 72 | Water |
| Example 2-4 | Broccoli 2 | - | - | No curing |
| Example 2-5 | Broccoli 3 | - | - | No curing |
| Example 2-6 | Broccoli 3 | 5 | 120 | Water |
| Example 2-7 | Broccoli 3 | 5 | 216 | Water |
| Example 2-8 | Broccoli 3 | 10 | 216 | Water |
| Example 2-9 | Broccoli 3 | 40 | 14 | Water |
| Example 2-10 | Broccoli 3 | 50 | 14 | Water |
| Example 2-11 | Broccoli 3 | 60 | 14 | Water |
| Example 2-12 | Broccoli 4 | 2 | 72 | Water (nutrient solution) |
| Example 2-13 | Broccoli 4 | 2 | 72 | Air |

(Cutting Step)

Each broccoli was cut into florets, and all samples were adjusted such that the length of the stem was 30 to 40 mm and the diameter of the stem was 10 mm or less. Some of the cut samples were used for the subsequent measurement of the amount of moisture, and the remaining cut samples were subjected to the subsequent blanching step.

(Blanching Step)

200 g of each of the cut samples was boiled with about 5 L of hot water (90°C) for 4 minutes, and immediately cooled with ice water for 4 minutes after heating. After cooling, the cut samples were subjected to the subsequent freezing step. The blanching step was started within 60 minutes following the end of the curing step.

(Freezing Step and Packaging Step)

Excess water on the surface of each of the samples was removed with kitchen paper, and the samples were frozen at -25°C for 1 hour using a rapid freeze apparatus (manufactured by MAYEKAWA MFG. CO., LTD.). The frozen samples were put in a polyethylene bag and stored at -25°C. The freezing step was started within 30 minutes following the end of the blanching step.

[Various Analyses]

(Amount of Moisture)

The amounts of moisture of raw broccoli and frozen broccoli were measured by the following procedure. The raw broccoli was cut into florets, which were then divided into flower buds and stems, and only the stems were used for measurement. The stems were finely cut with a kitchen knife. 3 g of the cut samples was collected in an aluminum foil cup, which was placed in a drying oven (constant temperature drying oven DX300, manufactured by Yamato Scientific Co., Ltd.) set at 105°C, and dried for 3 hours. The moisture in each of the samples was calculated by comparing the pre-drying mass to the post-drying mass. Each of the frozen broccoli samples was put in a pouch and thawed under running water. Then, half-thawed samples were divided into flower buds and stems, and only the stems were used for measurement. Thereafter, the measurement was performed in a similar manner to the case of raw broccoli.

(Yield)

A mass (W1) of broccoli before being subjected to a curing step was measured. The broccoli after the mass measurement was subjected to the curing step. Immediately after the curing, excess water droplets adhering to the broccoli were wiped off, and a mass (W2) was measured. The yield was calculated by the following formula. 4 broccoli heads were measured for each example, and an average value was obtained.

$$\text{Yield } (\%) = \{(W2 - W1)/W1\} \times 100$$

W1: mass of broccoli before curing (g)
W2: mass of broccoli after curing (g)

(Maximum Load)

The maximum load was analyzed at room temperature (22 ± 2°C). The frozen samples were naturally thawed for 3 to 4 hours before being used for analysis.
The maximum load was measured using a texture analyzer (TEXTUROMETER TTP-50BXII, manufactured by Taketomo Electric, LTD.). The samples were divided into flower buds and stems, and only stems were used for measurement. Each of the stems was diced (cut into a substantially cubic shape) with a kitchen knife such that each side was within a range of 3 to 5 mm, and 9 g of the diced stems was put into a cylindrical petri dish (manufactured by Taketomo Electric, LTD.) having an outer shape (outer dimension) with a diameter of 42 mm and a height of 13.5 mm (and having an inner side (inner dimension) with a diameter of 39 mm and a height of 12 mm (all actually measured values)), and then the height of the stems was adjusted to be uniform. By using the 36 mm puncture probe (flat type, manufactured by Taketomo Electric, LTD.), the maximum load when the diced samples placed in the petri dish were compressed at a compression speed of 1 mm/s and a compression rate of 40% was measured. Each of the samples was measured three times. The maximum load is considered as an index corresponding to the firmness (chewy texture) and crunchy texture of broccoli.

(Maximum Load Change Rate)

The maximum load change rate was calculated by the following formula.

Maximum load change rate (%) = maximum load of each sample after curing / maximum load of the sample prepared without being subjected to curing [0070] (Drip loss)

The drip loss was analyzed at room temperature (22 ± 2°C). The frozen samples were naturally thawed for 3 to 4 hours before being used for analysis.
The samples were divided into flower buds and stems, and only stems were used for measurement. The centrifuge (Universal Refrigerated Centrifuge Model 5922, manufactured by KUBOTA Corporation co., ltd.) was used for the measurement. Each of the stems was diced (cut into a substantially cubic shape) with a kitchen knife such that each side was within a range of 3 to 5 mm, and 2 to 3 g of the diced samples was placed on filter paper and centrifuged at room temperature for 6 minutes under the condition of RCF = 300 ($\times$ g). The mass of the moisture adhering to the filter paper and the moisture remaining in the centrifuge tube were defined as the drip loss, and the ratio of the drip loss to the mass of the samples before centrifugation was calculated. Each of the samples was measured three times, and an average value was obtained. In this regard, the drip loss is considered as an index related to the wateriness of the broccoli.

(Alcohol-Insoluble Solids (AIS))

The AIS was analyzed at room temperature (22 ± 2°C). The samples were thawed under running water to a half-thawed state and then used for analysis.
AIS was extracted in accordance with the method disclosed by Christiaens et al. in "Towards a better understanding of the pectin structure-function relationship in broccoli during processing: Part I-macroscopic and molecular analyses", Food Research International, July 2011, Volume 44, Issue 6, pp. 1604-1612.

Specifically, each of the samples subjected to the freezing step was put in a pouch and thawed under running water. Then, half-thawed samples were divided into flower buds and stems, and only the stems were used for measurement. 15 g of the finely cut stems was weighed, 96 mL of 99.5% ethanol was added thereto, and the mixture was homogenized at 10,000 rpm for 30 seconds using a homogenizer (AM-3, manufactured by NIHONSEIKI KAISHA LTD.). After crushing, the mixture was subjected to suction filtration using filter paper (No. 2, manufactured by ADVANTEC TOYO KAISHA, LTD.), the residue was recovered, 48 mL of 99.5% ethanol was added again thereto, and the mixture was homogenized in a similar manner. After the residue was collected by suction filtration again, 48 mL of acetone was added thereto, and the mixture was homogenized in a similar manner. The residue collected by suction filtration was dried overnight using a constant temperature drying oven (DX300, manufactured by Yamato Scientific Co., Ltd.) at 40°C, and the mass was measured. Although 95% ethanol was described in the above literature, 99.5% ethanol was used in this measurement.

The amount of AIS in the sample (on a wet basis: w.b.) was calculated by the following formula.

$$AIS \ (w.b.) \ (g/100g) = (W4 \ / \ W3) \times 100$$

W3: mass (g) of sample (finely cut stems)
W4: mass (g) of AIS dried overnight

The amount of AIS per dry mass (on a dry basis: d.b.) was calculated by the following formula.

$$AIS \ (d.b.)(g/100g) = \{AIS(w.b.) \ / \ (100 - MC)\} \times 100$$

MC: moisture of frozen broccoli (%)

(Extraction of Total Pectin)

Total pectin was extracted in accordance with the method disclosed by Melton et al. in "Determination of the uronic acid content of plant cell walls using a colorimetric assay", Current protocols in food analytical chemistry, August 2001, pp. E3.3.1-E3.3.4.

Specifically, 10 mg of the dried AIS was added to a screw-top test tube, a stirrer bar was put in the test tube, 1 mL of concentrated sulfuric acid was added thereto, and the test tube was capped. The test tube was placed in ice water and the contents were stirred for 5 minutes. Furthermore, 1 mL of concentrated sulfuric acid was added and stirred on ice water for 5 minutes. In addition, 0.5 mL of distilled water was added and stirred on ice water for 5 minutes. Another 0.5 mL of distilled water was added and stirred on ice water for 5 minutes. 7 mL of distilled water was added and stirred with a vortex mixer for 30 seconds, and then centrifuged at 2000 g for 10 minutes. The supernatant liquid was utilized as a total pectin extract.

(Extraction of Water-Soluble Pectin (WSP))

The WSP of each sample subjected to the freezing step was extracted in accordance with the method disclosed by Christiaens et al. in "Towards a better understanding of the pectin structure-function relationship in broccoli during processing: Part I-macroscopic and molecular analyses", Food Research International, July 2011, Volume 44, Issue 6, pp. 1604-1612.

Specifically, 250 mg of the dried AIS was added to an Erlenmeyer flask, 45 mL of distilled water was added to the flask and heated at 90 to 95°C for 5 minutes. After heating, the flask was cooled with ice water for 10 minutes. The sample was filtered using filter paper (No. 5A, manufactured by ADVANTEC TOYO KAISHA, LTD.), and distilled water was added to the supernatant liquid to bring the volume to 50 mL (preparation of WSP extract).

(Measurement of WSP Content and Total Pectin Content)

The amount of WSP or the total amount of pectin was measured in accordance with the method disclosed by Melton et al. in "Determination of the uronic acid content of plant cell walls using a colorimetric assay", Current protocols in food analytical chemistry, August 2001, pp. E3.3.1-E3.3.4.

Specifically, 40 μL of a 4M sulfamic acid/potassium sulfamate solution (pH 1.6) was added to 400 μL of the WSP extract or the total pectin extract, and the mixture was mixed. 2.4 mL of concentrated sulfuric acid containing 75 mM sodium tetraborate was added to the resultant mixture, and the mixture was further mixed. The mixture was heated in a boiling water bath for 20 minutes, and immediately cooled with ice water for 10 minutes after completion of the reaction. 80 $\mu$L of 1.5 g/L m-hydroxydiphenyl was added as a coloring reagent, and the mixture was left to stand for 10 minutes. Then, the absorbance at 525 nm was measured with an absorbance microplate reader (Multiskan SkyHigh, manufactured by Thermo Fisher Scientific Inc.). A similar operation was performed using distilled water as a blank sample, and a 0.5% (w/v) aqueous sodium hydroxide solution as a control sample was added instead of the coloring reagent, and the obtained absorbances were subtracted. A calibration curve was drawn from a standard substance containing galacturonic acid with a known concentration, and the amount of WSP (on a wet basis (w.b.)) or the total amount of pectin (% on a dry basis) in the sample was determined in terms of galacturonic acid (mg/100 mg AIS).

The amount of WSP was calculated by the following formula.

$$\text{WSP (on a wet basis (w.b))} = A \times B / 100$$

A = galacturonic acid equivalent (mg/100 mg AIS)
B = AIS (on a wet basis (w.b))

The total amount of pectin was calculated by the following formula.

Total amount of pectin (% on a dry basis (d.b.)) = [(A $\times$ B / 100) / (100 - C)] $\times$ 100

A = galacturonic acid equivalent (mg/100 mg AIS)
B = AIS (on a wet basis (w.b.))
C = moisture of frozen broccoli (w.b.)

(Calcium Ion)

Frozen broccoli sealed in a polyethylene bag was thawed under running water. Then, half-thawed broccoli was divided into flower buds and stems, and only the stems were used for the measurement. The samples were finely cut, and further crushed using a mill mixer (MR-280 (W), manufactured by YAMAZEN CORPORATION). The samples were filtered using a stocking-type net, and further centrifuged for 20 minutes using a centrifuge (Universal Refrigerated Centrifuge Model 5922, manufactured by KUBOTA Corporation co., ltd.) under the conditions of 8,000 rpm and room temperature (25°C). The calcium ion concentration of the supernatant liquid was measured using a compact calcium ion meter (LAQUAtwin Ca-11, manufactured by HORIBA Advanced Techno, Co., Ltd.).

The analysis results are shown in Tables 3 to 6.

[Table 3]

| Examples | Curing conditions | Cumulative temperature | Moisture (mass%) | | Maximum load | Maximum load change rate | Drip amount |
|---|---|---|---|---|---|---|---|
| | | | Fresh | Post-freezing | | | |
| | | (°C·h) | Stem | Stem | (gw/cm$^2$) | (%) | (%) |
| 2-1 | None | 0 | 89.9 | 91.6 | 1703 | 100.0 | 26.9 |
| 2-2 | 2°C water (72 h) | 144 | 92.4 | 92.8 | 1834 | 107.7 | 20.4 |
| 2-3 | 10°C water (72 h) | 720 | 92.2 | 92.4 | 1820 | 106.9 | 21.6 |
| 1-1 | 20°C water (72 h) | 1440 | 93.0 | 92.4 | 4068 | 238.9 | 19.7 |

[Table 4]

| Examples | Curing conditions | Cumulative temperature | Moisture (mass%) | | Maximum load | Maximum load change rate | Drip amount |
|---|---|---|---|---|---|---|---|
| | | | Fresh | Post-freezing | | | |
| | | (°C·h) | Stem | Stem | (gw/cm$^2$) | (%) | (%) |
| 2-4 | None | 0.0 | 89.0 | 89.5 | 1950 | 100.0 | 23.6 |
| 1-2 | 20°C water (24 h) | 480 | - | 92.3 | 3702 | 189.8 | 21.5 |
| 1-3 | 20°C water (48 h) | 960 | 92.0 | 92.2 | 3881 | 199.0 | 23.6 |
| 1-4 | 30°C water (5 h) | 150 | - | 92.4 | 2837 | 145.5 | 24.6 |
| 1-5 | 30°C water (24 h) | 720 | - | 93.2 | 4485 | 230.0 | 20.8 |

[Table 5]

| Examples | Curing conditions | Cumulative temperature | Moisture (mass%) | | Maximum load | Maximum load change rate | Drip amount |
|---|---|---|---|---|---|---|---|
| | | | Fresh | Post-freezing | | | |
| | | (°C·h) | Stem | Stem | (gw/cm$^2$) | (%) | (%) |
| 2-5 | None | 0 | 92.3 | 90.0 | 2845 | 100.0 | 18.4 |
| 2-6 | 5°C water (120 h) | 600 | 91.8 | 91.7 | 2571 | 90.4 | 18.8 |
| 2-7 | 5°C water (216 h) | 1080 | 92.3 | 92.2 | 2219 | 78.0 | 22.7 |
| 1-6 | 10°C water (120 h) | 1200 | 92.6 | 92.7 | 3544 | 124.6 | 19.1 |
| 2-8 | 10°C water (216 h) | 2160 | 92.3 | 92.7 | 2706 | 95.1 | 26.4 |
| 2-9 | 40°C water (14 h) | 560 | 92.3 | 92.8 | 2534 | 89.1 | 21.4 |
| 2-10 | 50°C water (14 h) | 700 | 92.5 | 91.9 | 2620 | 92.1 | 19.2 |
| 2-11 | 60°C water (14 h) | 840 | 92.6 | 92.1 | 2426 | 85.3 | 23.2 |

[Table 6]

| Examples | Curing conditions | Cumulative temperature | Moisture (mass%) | | Maximum load | Drip amount |
|---|---|---|---|---|---|---|
| | | | Fresh | Post-freezing | | |
| | | (°C·h) | Stem | Stem | (gw/cm$^2$) | (%) |
| 2-12 | 2°C nutrient solution (72 h) | 144 | 91.7 | - | 1428 | 33.4 |
| 1-7 | 20°C nutrient solution (72 h) | 1440 | 92.3 | 91.6 | 4892 | 22.5 |
| 1-8 | 20°C nutrient solution + light (72 h) | 1440 | - | 92.1 | 2918 | 18.9 |

As can be seen from the results in Table 3, in a case where the curing time was fixed at 72 hours, a significant increase in the maximum load and a significant decrease in the drip loss were observed when the curing temperature was 20°C as compared to when the curing temperature was 2°C or 10°C. It is considered that the increase in the maximum load contributes to improvement of the chewy texture and crunchy texture when eaten, and that the decrease in the drip loss contributes to suppression of the wateriness when eaten.

As can be seen from the results in Table 4, in a case where the curing temperature was 20°C or 30°C, a significant increase in the maximum load was observed at various times. In either case, it was suggested that the longer the curing time within an appropriate range, the more likely the maximum load is to increase, and that the higher the curing temperature within an appropriate range, the more likely the maximum load is to increase in a short time.

As can be seen from the results in Table 5, in a case where the curing temperature was 5°C, an increase in the maximum load and a decrease in the drip loss were not observed even when the curing time was 120 hours, and no improvement was observed even when the curing time was extended to 216 hours. In a case where the curing temperature was 10°C, as compared to when the curing time was 72 hours (Example 2-3, Table 3), a significant increase in the maximum load was observed when the curing time was set to 120 hours. Meanwhile, when the curing time was further extended to 216 hours, rather, a decrease in the maximum load and an increase in the drip loss were observed. This may be because when the curing time is too long, an increase in bacteria, aging of broccoli, and the like are more likely to progress. In addition, when the curing temperature was 40°C or higher, a decrease in the maximum load and an increase in the drip loss were observed. This may be because, when the curing temperature is too high, an increase in bacteria, aging of broccoli, and the like are more likely to progress, and the broccoli is more likely to be denatured due to conditions close to low-temperature cooking. However, it is considered that the increase in bacteria can be suppressed by allowing a disinfectant to coexist with the water. Thus, in a case where the disinfectant is used, higher curing temperatures or longer curing times may be applicable.

As can be seen from the results in Table 6, even when a nutrient solution was used in the curing step, a significant increase in the maximum load and a significant decrease in the drip loss were observed when the curing temperature was 20°C. In addition, also when light was irradiated in the curing step, a significant increase in the maximum load and a significant decrease in the drip loss were similarly observed.

In all examples, the amount of AIS on a wet basis was 4.3 to 6.5 g/100 g, the amount of AIS on a dry basis was 55.0 to 69.4 g/100 g, the amount of WSP was 54.0 to 137.1 mg/100 g, and the calcium ion concentration was 25 to 36 ppm, which were within the general range for the amounts of the components of broccoli. The yield of each of the samples subjected to the curing step was 7.1 to 24.0%. Overall, by undergoing the curing step, the yield tended to increase, the amount of AIS tended to increase especially on a dry basis, and the amount of WSP tended to decrease. This suggests that the curing step causes the broccoli to grow and undergo cell division, changing the amount or composition of the cell walls.

[Sensory Evaluation]

Frozen samples of Example 1-9 and Example 2-13 were naturally thawed for 4 hours, and then subjected to sensory evaluation for firmness, crunchy texture, and wateriness. The sensory evaluation was performed with 8 trained expert panelists.

(Firmness)

The sample of Example 1-9 was evaluated as "a" when the firmness was high, evaluated as "b" when the firmness was comparable, and evaluated as "c" when the firmness was low, as compared to the sample of Example 2-13.

(Crunchy Texture)

The sample of Example 1-9 was evaluated as "a" when the crunchy texture was strong, evaluated as "b" when the crunchy texture was comparable, and evaluated as "c" when the crunchy texture was weak, as compared to the sample of Example 2-13.

(Wateriness)

The sample of Example 1-9 was evaluated as "a" when the wateriness was low, evaluated as "b" when the wateriness was comparable, and evaluated as "c" when the wateriness was high, as compared to the sample of Example 2-13.

The results of sensory evaluation are shown in Table 7.

[Table 7]

| Panelist No. | 1 | 2 | 3 | 4 | 5 | 6 | 7 | 8 |
|---|---|---|---|---|---|---|---|---|
| Firmness | a | a | a | a | a | a | a | a |
| Crunchy texture | a | a | a | a | a | b | b | b |
| Wateriness | a | a | b | a | b | b | a | b |

From the above results, it was shown that the texture of broccoli is actually improved through the curing step.

- Study on Broccoli 2

[Production of Frozen Broccoli]

(Obtaining Broccoli)

A plurality of heads of each of broccoli 5 to 7 shown in Table 8 below were obtained. For all the broccoli, the harvest date was within 5 days from the obtaining date. The heads of broccoli 5 and 6 were harvested on a harvest date on which a mean of average temperatures for 4 days before harvest including the harvest date was 10°C or lower, and on which a mean of minimum temperatures for 4 days before harvest including the harvest date was 5°C or lower. The head of broccoli 7 was harvested on a harvest date on which a mean of average temperatures for 4 days before harvest including the harvest date was 15°C or higher, and on which a mean of minimum temperatures for 4 days before harvest including the harvest date was 10°C or higher.

[Table 8]

| No. | Variety | Production area | Sample obtaining date |
|---|---|---|---|
| Broccoli 5 | Pixel | Ibaraki Prefecture | Early December 2023 |
| Broccoli 6 | Kombanwa | Ibaraki Prefecture | Late January 2024 |
| Broccoli 7 | Pixel | Ibaraki Prefecture | Mid-May 2023 |

(Curing Step)

The broccoli used in each example is shown in Table 9. For each example, 4 to 6 broccoli heads were used.
In Example 3-4 to 3-6, by using a constant temperature oven (Low Temperature Incubator IN604, manufactured by Yamato Scientific Co., Ltd.) set to each temperature shown in Table 9, curing was performed for each of the times shown in Table 9 in a state where cut surfaces of broccoli stems were immersed in tap water. Here, since there is a possibility that the broccoli cut surfaces may have dried or the cut surface tissues may have aged, the broccoli cut surfaces were cut off by about 1 cm to obtain fresh cross sections, and the resultant cross sections were subjected to curing. Each broccoli after curing was quickly subjected to a cutting step, a blanching step, a freezing step, and a packaging step in a similar procedure to Study 1.
In Examples 3-1 to 3-3, curing was not performed, and each broccoli was subjected to the cutting step, the blanching step, the freezing step, and the packaging step in a similar procedure to Study 1 on the day of obtaining the broccoli.

[Table 9]

| | Sample No. | Temperature (°C) | Time (h) | Curing conditions |
|---|---|---|---|---|
| Example 3-1 | Broccoli 5 | - | - | None |
| Example 3-2 | Broccoli 6 | - | - | None |
| Example 3-3 | Broccoli 7 | - | - | None |
| Example 3-4 | Broccoli 5 | 20 | 72 | Water |
| Example 3-5 | Broccoli 6 | 20 | 72 | Water |
| Example 3-6 | Broccoli 7 | 20 | 72 | Water |

For each of the samples, the maximum load, the maximum load change rate, and the total pectin content were evaluated in a similar procedure to Study 1. The analysis results are shown in Table 10.

[Table 10]

| Examples | Curing conditions | Maximum load (gw/cm$^2$) | Maximum load change rate (%) | Total pectin content (% dry basis) |
|---|---|---|---|---|
| 3-1 | None | 6092 | 100.0 | 10.5 |
| 3-2 | None | 2966 | 100.0 | 10.1 |
| 3-3 | None | 4867 | 100.0 | 10.2 |
| 3-4 | 20°C water (72 h) | 10407 | 170.8 | 12.6 |

(continued)

| Examples | Curing conditions | Maximum load | Maximum load change rate | Total pectin content |
|---|---|---|---|---|
| | | (gw/cm$^2$) | (%) | (% dry basis) |
| 3-5 | 20°C water (72 h) | 4069 | 137.2 | 14.1 |
| 3-6 | 20°C water (72 h) | 5583 | 114.7 | 11.5 |

As can be seen from the results in Table 10, the maximum load was increased and the total pectin content was increased by performing curing. In particular, it was found that even when the total pectin content of broccoli as a raw material (corresponding to Examples 3-4 to 3-6) was less than 11.0 mass%, the total pectin content became 11.0 mass% or more due to the curing. In addition, the increase in total pectin content was remarkable in broccoli harvested on a harvest date on which a mean of average temperatures for 4 days before harvest including the harvest date was 10°C or lower, and a mean of minimum temperatures for 4 days before harvest including the harvest date was 5°C or lower. This indicates that the effect of increasing the total pectin content by curing is significant, for example, in broccoli harvested in fall and winter.

- Study on Cauliflower

[Production of Frozen Cauliflower]

(Obtaining Cauliflower)

A plurality of heads of each of cauliflower 1 to 3 shown in Table 11 below were obtained. Regarding all the cauliflower, the harvest date was within 5 days from the obtaining date, and cauliflower was harvested on a harvest date on which a mean of average temperatures for 4 days before harvest including the harvest date was 10°C or lower, and on which a mean of minimum temperatures for 4 days before harvest including the harvest date was 5°C or lower.

[Table 11]

| No. | Production area | Sample obtaining date |
|---|---|---|
| Cauliflower 1 | Kumamoto Prefecture | December 8, 2023 |
| Cauliflower 2 | Shizuoka Prefecture | February 2, 2024 |
| Cauliflower 3 | Tokushima Prefecture | March 8, 2024 |

(Curing Step)

The cauliflower used in each example is shown in Table 12. For each example, 4 to 6 cauliflower heads were used.

In Examples 4-2, 4-5, and 4-7, by using a constant temperature oven (Low Temperature Incubator IN604, manufactured by Yamato Scientific Co., Ltd.) set to each temperature shown in Table 12, curing was performed for each of the times shown in Table 12 in a state where cut surfaces of cauliflower stems were immersed in tap water. Here, since there is a possibility that the cauliflower cut surfaces may have dried or the cut surface tissues may have aged, the cauliflower cut surfaces were cut off by about 1 cm to obtain fresh cross sections, and the resultant cross sections were subjected to curing. Each cauliflower after curing was quickly subjected to the cutting step, the blanching step, the freezing step, and the packaging step in a similar procedure to broccoli.

In Example 4-4, each cauliflower was left to stand in a constant temperature oven (Low Temperature Incubator IN604, manufactured by Yamato Scientific Co., Ltd.) set to each temperature shown in Table 12, and curing was performed in an air atmosphere for each of the times shown in Table 12. Each cauliflower after curing was quickly subjected to the cutting step, the blanching step, the freezing step, and the packaging step in a similar procedure to broccoli.

In Examples 4-1, 4-3, and 4-6, curing was not performed, and each cauliflower was subjected to the cutting step, the blanching step, the freezing step, and the packaging step in a similar procedure to broccoli on the day of obtaining the cauliflower.

[Table 12]

|  | Sample No. | Temperature (°C) | Time (h) | Curing conditions |
|---|---|---|---|---|
| Example 4-1 | Cauliflower 1 | - | - | None |
| Example 4-2 | Cauliflower 1 | 20 | 72 | Water |
| Example 4-3 | Cauliflower 2 | - | - | None |
| Example 4-4 | Cauliflower 2 | 20 | 72 | Air |
| Example 4-5 | Cauliflower 2 | 30 | 72 | Water |
| Example 4-6 | Cauliflower 3 | - | - | None |
| Example 4-7 | Cauliflower 3 | 10 | 120 | Water |

For each of the samples, the amount of moisture, the maximum load, and the maximum load change rate were evaluated in a similar procedure to broccoli. The analysis results are shown in Table 13.

[Table 13]

| Examples | Curing conditions | Cumulative temperature | Moisture (mass%) | | Maximum load | Maximum load change rate |
|---|---|---|---|---|---|---|
|  |  |  | Fresh | Post-freezing |  |  |
|  |  | (°C·h) | Stem | Stem | (gw/cm$^2$) | (%) |
| 4-1 | None | 0 | 90.2 | 91.5 | 2418 | 100.0 |
| 4-2 | 20°C water (72 h) | 1440 | 93.7 | 93.7 | 4334 | 179.2 |
| 4-3 | None | 0 | 88.6 | 89.2 | 2495 | 100.0 |
| 4-4 | 20°C air (72 h) | 1440 | 86.6 | 88.7 | 2891 | 115.9 |
| 4-5 | 30°C water (72 h) | 2160 | 88.7 | 90.2 | 4435 | 177.8 |
| 4-6 | None | 0 | 91.3 | 92.4 | 5684 | 100.0 |
| 4-7 | 10°C water (120 h) | 1200 | 90.2 | 91.7 | 5937 | 104.4 |

Even when using cauliflower, the maximum load was increased by curing, similarly to when using broccoli. Therefore, it was shown that the texture of cauliflower can also be improved by the method of the present disclosure.

Exemplary embodiments of the present disclosure are shown below.

[1] A method for producing frozen broccoli or frozen cauliflower, including a step of curing post-harvest broccoli or cauliflower before freezing the post-harvest broccoli or cauliflower.

[2] The production method according to [1], wherein the curing is performed such that a maximum load change rate of the frozen broccoli or frozen cauliflower is 110% or more.

[3] The production method according to [1], wherein the curing is performed such that a maximum load change rate of the frozen broccoli or frozen cauliflower is 120% or more.

[4] The production method according to [1], wherein the curing is performed such that a maximum load change rate of the frozen broccoli or frozen cauliflower is 140% or more.

[5] The production method according to [1], wherein the curing is performed such that a maximum load change rate of the frozen broccoli or frozen cauliflower is 180% or more.

[6] The production method according to [1], wherein the curing is performed such that a maximum load change rate of the frozen broccoli or frozen cauliflower is 200% or more.

[7] The production method according to any one of [1] to [6], wherein a combination of temperature and time in the curing is any one of the following [A] to [C]:

[A] a temperature of 10°C or higher and lower than 15°C, and a time of 75 hours or longer and 200 hours or shorter;
[B] a temperature of 15°C or higher and lower than 25°C, and a time of 5 hours or longer and 150 hours or shorter; and
[C] a temperature of 25°C or higher and lower than 40°C, and a time of 2 hours or longer and 100 hours or shorter.

[8] The production method according to [7], wherein the combination of temperature and time in the curing is [A] described above, and the time in the curing is 80 hours or longer.

[9] The production method according to [7], wherein the combination of temperature and time in the curing is [A] described above, and the time in the curing is 90 hours or longer.

[10] The production method according to [7], wherein the combination of temperature and time in the curing is [A] described above, and the time in the curing is 100 hours or longer.

[11] The production method according to any one of [7] to [10], wherein the combination of temperature and time in the curing is [A] described above, and the time in the curing is 180 hours or shorter.

[12] The production method according to any one of [7] to [10], wherein the combination of temperature and time in the curing is [A] described above, and the time in the curing is 160 hours or shorter.

[13] The production method according to any one of [7] to [10], wherein the combination of temperature and time in the curing is [A] described above, and the time in the curing is 140 hours or shorter.

[14] The production method according to [7], wherein the combination of temperature and time in the curing is [B] described above, and the time in the curing is 10 hours or longer.

[15] The production method according to [7], wherein the combination of temperature and time in the curing is [B] described above, and the time in the curing is 15 hours or longer.

[16] The production method according to [7], wherein the combination of temperature and time in the curing is [B] described above, and the time in the curing is 19 hours or longer.

[17] The production method according to [7], wherein the combination of temperature and time in the curing is [B] described above, and the time in the curing is 21 hours or longer.

[18] The production method according to any one of [7] and [14] to [17], wherein the combination of temperature and time in the curing is [B] described above, and the time in the curing is 130 hours or shorter.

[19] The production method according to any one of [7] and [14] to [17], wherein the combination of temperature and time in the curing is [B] described above, and the time in the curing is 100 hours or shorter.

[20] The production method according to any one of [7] and [14] to [17], wherein the combination of temperature and time in the curing is [B] described above, and the time in the curing is 90 hours or shorter.

[21] The production method according to any one of [7] and [14] to [17], wherein the combination of temperature and time in the curing is [B] described above, and the time in the curing is 80 hours or shorter.

[22] The production method according to any one of [7] and [14] to [17], wherein the combination of temperature and time in the curing is [B] described above, and the time in the curing is 70 hours or shorter.

[23] The production method according to any one of [7] and [14] to [17], wherein the combination of temperature and time in the curing is [B] described above, and the time in the curing is 50 hours or shorter.

[24] The production method according to any one of [7] and [14] to [17], wherein the combination of temperature and time in the curing is [B] described above, and the time in the curing is 30 hours or shorter.

[25] The production method according to any one of [7] and [14] to [24], wherein the combination of temperature and time in the curing is [B] described above, and the temperature in the curing is 16°C or higher.

[26] The production method according to any one of [7] and [14] to [24], wherein the combination of temperature and time in the curing is [B] described above, and the temperature in the curing is 17°C or higher.

[27] The production method according to any one of [7] and [14] to [24], wherein the combination of temperature and time in the curing is [B] described above, and the temperature in the curing is 18°C or higher.

[28] The production method according to any one of [7] and [14] to [27], wherein the combination of temperature and time in the curing is [B] described above, and the temperature in the curing is 24°C or lower.

[29] The production method according to any one of [7] and [14] to [27], wherein the combination of temperature and time in the curing is [B] described above, and the temperature in the curing is 23°C or lower.

[30] The production method according to any one of [7] and [14] to [27], wherein the combination of temperature and time in the curing is [B] described above, and the temperature in the curing is 22°C or lower.

[31] The production method according to [7], wherein the combination of temperature and time in the curing is [C] described above, and the time in the curing is 4 hours or longer.

[32] The production method according to [7], wherein the combination of temperature and time in the curing is [C] described above, and the time in the curing is 5 hours or longer.

[33] The production method according to [7], wherein the combination of temperature and time in the curing is [C] described above, and the time in the curing is 8 hours or longer.

[34] The production method according to [7], wherein the combination of temperature and time in the curing is [C] described above, and the time in the curing is 10 hours or longer.

[35] The production method according to [7], wherein the combination of temperature and time in the curing is [C] described above, and the time in the curing is 20 hours or longer.

[36] The production method according to any one of [7] and [31] to [35], wherein the combination of temperature and time in the curing is [C] described above, and the time in the curing is 90 hours or shorter.

[37] The production method according to any one of [7] and [31] to [35], wherein the combination of temperature and time in the curing is [C] described above, and the time in the curing is 70 hours or shorter.

[38] The production method according to any one of [7] and [31] to [35], wherein the combination of temperature and time in the curing is [C] described above, and the time in the curing is 50 hours or shorter.

[39] The production method according to any one of [7] and [31] to [35], wherein the combination of temperature and time in the curing is [C] described above, and the time in the curing is 40 hours or shorter.

[40] The production method according to any one of [7] and [31] to [35], wherein the combination of temperature and time in the curing is [C] described above, and the time in the curing is 30 hours or shorter.

[41] The production method according to any one of [7] and [31] to [40], wherein the combination of temperature and time in the curing is [C] described above, and the temperature in the curing is 38°C or lower.

[42] The production method according to any one of [7] and [31] to [40], wherein the combination of temperature and time in the curing is [C] described above, and the temperature in the curing is 36°C or lower.

[43] The production method according to any one of [7] and [31] to [40], wherein the combination of temperature and time in the curing is [C] described above, and the temperature in the curing is 34°C or lower.

[44] The production method according to any one of [7] and [31] to [40], wherein the combination of temperature and time in the curing is [C] described above, and the temperature in the curing is 32°C or lower.

[45] The production method according to any one of [1] to [44], wherein broccoli or cauliflower to be used is harvested on a harvest date on which a mean of average temperatures for 4 days before harvest including the harvest date is 15°C or lower.

[46] The production method according to any one of [1] to [44], wherein broccoli or cauliflower to be used is harvested on a harvest date on which a mean of average temperatures for 4 days before harvest including the harvest date is 12°C or lower.

[47] The production method according to any one of [1] to [44], wherein broccoli or cauliflower to be used is harvested on a harvest date on which a mean of average temperatures for 4 days before harvest including the harvest date is 10°C or lower.

[48] The production method according to any one of [1] to [47], wherein broccoli or cauliflower to be used is harvested on a harvest date on which a mean of minimum temperatures for 4 days before harvest including the harvest date is 8°C or lower.

[49] The production method according to any one of [1] to [47], wherein broccoli or cauliflower to be used is harvested on a harvest date on which a mean of minimum temperatures for 4 days before harvest including the harvest date is 6°C or lower.

[50] The production method according to any one of [1] to [47], wherein broccoli or cauliflower to be used is harvested on a harvest date on which a mean of minimum temperatures for 4 days before harvest including the harvest date is 5°C or lower.

[51] The production method according to any one of [1] to [50], wherein broccoli or cauliflower to be used is harvested in October, November, December, January, February, March, April, or May in Japan.

[52] The production method according to any one of [1] to [51], wherein the curing is performed in an air atmosphere.

[53] The production method according to any one of [1] to [52], wherein the curing is performed under a humidified condition.

[54] The production method according to [53], wherein the humidified condition is one of the following (1) or (2):

(1) bringing broccoli or cauliflower into contact with water; or
(2) disposing broccoli or cauliflower in a humidified space.

[55] The production method according to [53] or [54], wherein broccoli or cauliflower is brought into contact with water, and a disinfectant coexists with the water.

[56] The production method according to [55], wherein the disinfectant is at least one selected from the group consisting of sodium hypochlorite, hypochlorous acid, sodium chlorite, chlorous acid, peracetic acid, hydrogen peroxide, ethanol, and organic acids.

[57] The production method according to any one of [53] to [56], wherein broccoli or cauliflower is brought into contact with water, and the water is a nutrient solution.

[58] The production method according to any one of [1] to [57], wherein the curing is performed under light irradiation.

[59] The production method according to any one of [1] to [57], wherein the curing is performed in a dark room.

[60] The production method according to any one of [1] to [59], further including a blanching step.

[61] The production method according to [60], wherein the blanching is started within 4 hours after the end of the curing.

[62] Frozen broccoli or frozen cauliflower obtained by the production method according to any one of [1] to [61].

[63] A method for improving texture of frozen broccoli or frozen cauliflower, including a step of curing post-harvest broccoli or cauliflower before freezing the post-harvest broccoli or cauliflower.

[64] The method according to [63], wherein a combination of temperature and time in the curing is any one of the following [A] to [C]:

[A] a temperature of 10°C or higher and lower than 15°C, and a time of 75 hours or longer and 200 hours or shorter;
[B] a temperature of 15°C or higher and lower than 25°C, and a time of 5 hours or longer and 150 hours or shorter; and
[C] a temperature of 25°C or higher and lower than 40°C, and a time of 2 hours or longer and 100 hours or shorter.

[65] The production method according to [64], wherein the combination of temperature and time in the curing is [A] described above, and the time in the curing is 80 hours or longer.

[66] The production method according to [64], wherein the combination of temperature and time in the curing is [A] described above, and the time in the curing is 90 hours or longer.

[67] The production method according to [64], wherein the combination of temperature and time in the curing is [A] described above, and the time in the curing is 100 hours or longer.

[68] The production method according to any one of [64] to [67], wherein the combination of temperature and time in the curing is [A] described above, and the time in the curing is 180 hours or shorter.

[69] The production method according to any one of [64] to [67], wherein the combination of temperature and time in the curing is [A] described above, and the time in the curing is 160 hours or shorter.

[70] The production method according to any one of [64] to [67], wherein the combination of temperature and time in the curing is [A] described above, and the time in the curing is 140 hours or shorter.

[71] The production method according to [64], wherein the combination of temperature and time in the curing is [B] described above, and the time in the curing is 10 hours or longer.

[72] The production method according to [64], wherein the combination of temperature and time in the curing is [B] described above, and the time in the curing is 15 hours or longer.

[73] The production method according to [64], wherein the combination of temperature and time in the curing is [B] described above, and the time in the curing is 19 hours or longer.

[74] The production method according to [64], wherein the combination of temperature and time in the curing is [B] described above, and the time in the curing is 21 hours or longer.

[75] The production method according to any one of [64] and [71] to [74], wherein the combination of temperature and time in the curing is [B] described above, and the time in the curing is 130 hours or shorter.

[76] The production method according to any one of [64] and [71] to [74], wherein the combination of temperature and time in the curing is [B] described above, and the time in the curing is 100 hours or shorter.

[77] The production method according to any one of [64] and [71] to [74], wherein the combination of temperature and time in the curing is [B] described above, and the time in the curing is 90 hours or shorter.

[78] The production method according to any one of [64] and [71] to [74], wherein the combination of temperature and time in the curing is [B] described above, and the time in the curing is 80 hours or shorter.

[79] The production method according to any one of [64] and [71] to [74], wherein the combination of temperature and time in the curing is [B] described above, and the time in the curing is 70 hours or shorter.

[80] The production method according to any one of [64] and [71] to [74], wherein the combination of temperature and time in the curing is [B] described above, and the time in the curing is 50 hours or shorter.

[81] The production method according to any one of [64] and [71] to [74], wherein the combination of temperature and time in the curing is [B] described above, and the time in the curing is 30 hours or shorter.

[82] The production method according to any one of [64] and [71] to [81], wherein the combination of temperature and time in the curing is [B] described above, and the temperature in the curing is 16°C or higher.

[83] The production method according to any one of [64] and [71] to [81], wherein the combination of temperature and time in the curing is [B] described above, and the temperature in the curing is 17°C or higher.

[84] The production method according to any one of [64] and [71] to [81], wherein the combination of temperature and time in the curing is [B] described above, and the temperature in the curing is 18°C or higher.

[85] The production method according to any one of [64] and [71] to [84], wherein the combination of temperature and time in the curing is [B] described above, and the temperature in the curing is 24°C or lower.

[86] The production method according to any one of [64] and [71] to [84], wherein the combination of temperature and time in the curing is [B] described above, and the temperature in the curing is 23°C or lower.

[87] The production method according to any one of [64] and [71] to [84], wherein the combination of temperature and time in the curing is [B] described above, and the temperature in the curing is 22°C or lower.

[88] The production method according to [64], wherein the combination of temperature and time in the curing is [C] described above, and the time in the curing is 4 hours or longer.

[89] The production method according to [64], wherein the combination of temperature and time in the curing is [C] described above, and the time in the curing is 5 hours or longer.

[90] The production method according to [64], wherein the combination of temperature and time in the curing is [C] described above, and the time in the curing is 8 hours or longer.

[91] The production method according to [64], wherein the combination of temperature and time in the curing is [C] described above, and the time in the curing is 10 hours or longer.

[92] The production method according to [64], wherein the combination of temperature and time in the curing is [C] described above, and the time in the curing is 20 hours or longer.

[93] The production method according to any one of [64] and [88] to [92], wherein the combination of temperature and time in the curing is [C] described above, and the time in the curing is 90 hours or shorter.

[94] The production method according to any one of [64] and [88] to [92], wherein the combination of temperature and time in the curing is [C] described above, and the time in the curing is 70 hours or shorter.

[95] The production method according to any one of [64] and [88] to [92], wherein the combination of temperature and time in the curing is [C] described above, and the time in the curing is 50 hours or shorter.

[96] The production method according to any one of [64] and [88] to [92], wherein the combination of temperature and time in the curing is [C] described above, and the time in the curing is 40 hours or shorter.

[97] The production method according to any one of [64] and [88] to [92], wherein the combination of temperature and time in the curing is [C] described above, and the time in the curing is 30 hours or shorter.

[98] The production method according to any one of [64] and [88] to [97], wherein the combination of temperature and time in the curing is [C] described above, and the temperature in the curing is 38°C or lower.

[99] The production method according to any one of [64] and [88] to [97], wherein the combination of temperature and time in the curing is [C] described above, and the temperature in the curing is 36°C or lower.

[100] The production method according to any one of [64] and [88] to [97], wherein the combination of temperature and time in the curing is [C] described above, and the temperature in the curing is 34°C or lower.

[101] The production method according to any one of [64] and [88] to [97], wherein the combination of temperature and time in the curing is [C] described above, and the temperature in the curing is 32°C or lower.

[102] The method according to any one of [63] to [101], which is a method for improving texture of frozen broccoli or frozen cauliflower using broccoli or cauliflower harvested on a harvest date on which a mean of average temperatures for 4 days before harvest including the harvest date is 15°C or lower.

[103] The method according to any one of [63] to [101], which is a method for improving texture of frozen broccoli or frozen cauliflower using broccoli or cauliflower harvested on a harvest date on which a mean of average temperatures for 4 days before harvest including the harvest date is 12°C or lower.

[104] The method according to any one of [63] to [101], which is a method for improving texture of frozen broccoli or frozen cauliflower using broccoli or cauliflower harvested on a harvest date on which a mean of average temperatures for 4 days before harvest including the harvest date is 10°C or lower.

[105] The method according to any one of [63] to [104], which is a method for improving texture of frozen broccoli or frozen cauliflower using broccoli or cauliflower harvested on a harvest date on which a mean of minimum temperatures for 4 days before harvest including the harvest date is 8°C or lower.

[106] The method according to any one of [63] to [104], which is a method for improving texture of frozen broccoli or frozen cauliflower using broccoli or cauliflower harvested on a harvest date on which a mean of minimum temperatures for 4 days before harvest including the harvest date is 6°C or lower.

[107] The method according to any one of [63] to [104], which is a method for improving texture of frozen broccoli or frozen cauliflower using broccoli or cauliflower harvested on a harvest date on which a mean of minimum temperatures for 4 days before harvest including the harvest date is 7°C or lower.

[108] The method according to any one of [63] to [107], which is a method for improving texture of frozen broccoli or frozen cauliflower using broccoli or cauliflower harvested in October, November, December, January, February, March, April, or May in Japan.

[109] The method according to any one of [63] to [108], wherein the curing is performed in an air atmosphere.

[110] The method according to any one of [63] to [108], wherein the curing is performed under a humidified condition.

[111] The method according to [110], wherein the humidified condition is one of the following (1) or (2):

(1) bringing broccoli or cauliflower into contact with water; or
(2) disposing broccoli or cauliflower in a humidified space.

[112] The method according to [110] or [111], wherein broccoli or cauliflower is brought into contact with water, and a disinfectant coexists with the water.

[113] The method according to [112], wherein the disinfectant is at least one selected from the group consisting of sodium hypochlorite, hypochlorous acid, sodium chlorite, chlorous acid, peracetic acid, hydrogen peroxide, ethanol, and organic acids.

[114] The method according to any one of [110] to [113], wherein broccoli or the cauliflower is brought into contact with water, and the water is a nutrient solution.

[115] The method according to any one of [63] to [114], wherein the curing is performed under light irradiation.

[116] The method according to any one of [63] to [114], wherein the curing is performed in a dark room.

[117] The method according to any one of [63] to [116], further including a blanching step.

[118] The method according to [117], wherein the blanching is started within 4 hours after the end of the curing.

[119] Frozen broccoli or frozen cauliflower obtained by the method according to any one of [63] to [118].

[120] Frozen broccoli having a total pectin content of 11.0 mass% or more.

[121] Frozen broccoli having a total pectin content of 11.4 mass% or more.

[122] Frozen broccoli having a total pectin content of 11.8 mass% or more.

[123] Frozen broccoli having a total pectin content of 12.2 mass% or more.

[124] Frozen broccoli having a total pectin content of 12.6 mass% or more.

[125] Frozen broccoli having a total pectin content of 13.0 mass% or more.

[126] Frozen broccoli having a total pectin content of 13.4 mass% or more.

[127] Frozen broccoli having a total pectin content of 13.8 mass% or more.

[128] The frozen broccoli according to any one of [120] to [127], wherein a broccoli as a raw material has a total pectin content of less than 11.0 mass%.

[129] The frozen broccoli according to any one of [120] to [127], wherein a broccoli as a raw material has a total pectin content of less than 10.6 mass%.

[130] The frozen broccoli according to any one of [120] to [127], wherein a broccoli as a raw material has a total pectin content of less than 10.4 mass%.

[131] The frozen broccoli according to any one of [120] to [130], wherein the broccoli as a raw material is broccoli harvested on a harvest date on which a mean of average temperatures for 4 days before harvest including the harvest date is 15°C or lower.

[132] The frozen broccoli according to any one of [120] to [130], wherein the broccoli as a raw material is broccoli harvested on a harvest date on which a mean of average temperatures for 4 days before harvest including the harvest date is 12°C or lower.

[133] The frozen broccoli according to any one of [120] to [130], wherein the broccoli as a raw material is broccoli harvested on a harvest date on which a mean of average temperatures for 4 days before harvest including the harvest date is 10°C or lower.

[134] The frozen broccoli according to any one of [120] to [133], wherein the broccoli as a raw material is broccoli harvested on a harvest date on which a mean of minimum temperatures for 4 days before harvest including the harvest date is 8°C or lower.

[135] The frozen broccoli according to any one of [120] to [133], wherein the broccoli as a raw material is broccoli harvested on a harvest date on which a mean of minimum temperatures for 4 days before harvest including the harvest date is 6°C or lower.

[136] The frozen broccoli according to any one of [120] to [133], wherein the broccoli as a raw material is broccoli harvested on a harvest date on which a mean of minimum temperatures for 4 days before harvest including the harvest date is 5°C or lower.

[137] The frozen broccoli according to any one of [120] to [133], wherein the broccoli as a raw material is broccoli harvested in October, November, December, January, February, March, April, or May in Japan.

**Claims**

1. A method for producing frozen broccoli or frozen cauliflower, comprising a step of curing post-harvest broccoli or cauliflower before freezing the post-harvest broccoli or cauliflower.

2. The production method according to claim 1, wherein the curing is performed such that a maximum load change rate of the frozen broccoli or frozen cauliflower is 110% or more.

3. The production method according to claim 1 or 2, wherein a combination of temperature and time in the curing is any one of the following (A) to (C):

(A) a temperature of 10°C or higher and lower than 15°C, and a time of 75 hours or longer and 200 hours or shorter;
(B) a temperature of 15°C or higher and lower than 25°C, and a time of 5 hours or longer and 150 hours or shorter; and
(C) a temperature of 25°C or higher and lower than 40°C, and a time of 2 hours or longer and 100 hours or shorter.

4. The production method according to claim 1 or 2, wherein broccoli or cauliflower to be used is harvested on a harvest date on which a mean of average temperatures for 4 days before harvest including the harvest date is 20°C or lower.

5. The production method according to claim 1 or 2, wherein broccoli or cauliflower to be used is harvested on a harvest date on which a mean of minimum temperatures for 4 days before harvest including the harvest date is 18°C or lower.

6. The production method according to claim 1 or 2, wherein broccoli or cauliflower to be used is harvested in October, November, December, January, February, March, April, or May in Japan.

7. The production method according to claim 1 or 2, wherein the curing is performed in an air atmosphere.

8. The production method according to claim 1 or 2, wherein the curing is performed under a humidified condition.

9. The production method according to claim 8, wherein the humidified condition is one of the following (1) or (2):

   (1) bringing broccoli or cauliflower into contact with water; or
   (2) disposing broccoli or cauliflower in a humidified space.

10. The production method according to claim 8, wherein broccoli or cauliflower is brought into contact with water, and a disinfectant coexists with the water.

11. The production method according to claim 10, wherein the disinfectant is at least one selected from the group consisting of sodium hypochlorite, hypochlorous acid, sodium chlorite, chlorous acid, peracetic acid, hydrogen peroxide, ethanol, and organic acids.

12. The production method according to claim 8, wherein broccoli or cauliflower is brought into contact with water, and the water is a nutrient solution.

13. The production method according to claim 1 or 2, wherein the curing is performed under light irradiation.

14. The production method according to claim 1 or 2, wherein the curing is performed in a dark room.

15. The production method according to claim 1 or 2, further comprising a blanching step.

16. The production method according to claim 15, wherein the blanching is started within 4 hours after the end of the curing.

17. Frozen broccoli or frozen cauliflower obtained by the production method according to claim 1 or 2.

18. A method for improving texture of frozen broccoli or frozen cauliflower, comprising a step of curing post-harvest broccoli or cauliflower before freezing the post-harvest broccoli or cauliflower.

19. The method according to claim 18, wherein a combination of temperature and time in the curing is any one of the following (A) to (C):

   (A) a temperature of 10°C or higher and lower than 15°C, and a time of 75 hours or longer and 200 hours or shorter;
   (B) a temperature of 15°C or higher and lower than 25°C, and a time of 5 hours or longer and 150 hours or shorter; and
   (C) a temperature of 25°C or higher and lower than 40°C, and a time of 2 hours or longer and 100 hours or shorter.

20. The method according to claim 18 or 19, which is a method for improving texture of frozen broccoli or frozen cauliflower using broccoli or cauliflower harvested on a harvest date on which a mean of average temperatures for 4 days before harvest including the harvest date is 20°C or lower.

21. The method according to claim 18 or 19, which is a method for improving texture of frozen broccoli or frozen cauliflower using broccoli or cauliflower harvested on a harvest date on which a mean of minimum temperatures for 4 days before harvest including the harvest date is 18°C or lower.

22. The method according to claim 18 or 19, which is a method for improving texture of frozen broccoli or frozen cauliflower using broccoli or cauliflower harvested in October, November, December, January, February, March, April, or May in Japan.

23. The method according to claim 18 or 19, wherein the curing is performed in an air atmosphere.

24. The method according to claim 18 or 19, wherein the curing is performed under a humidified condition.

25. The method according to claim 24, wherein the humidified condition is one of the following (1) or (2):

   (1) bringing broccoli or cauliflower into contact with water; or
   (2) disposing broccoli or cauliflower in a humidified space.

26. The method according to claim 24, wherein broccoli or cauliflower is brought into contact with water, and a disinfectant coexists with the water.

27. The method according to claim 26, wherein the disinfectant is at least one selected from the group consisting of sodium hypochlorite, hypochlorous acid, sodium chlorite, chlorous acid, peracetic acid, hydrogen peroxide, ethanol, and organic acids.

28. The method according to claim 24, wherein broccoli or cauliflower is brought into contact with water, and the water is a nutrient solution.

29. The method according to claim 18 or 19, wherein the curing is performed under light irradiation.

30. The method according to claim 18 or 19, wherein the curing is performed in a dark room.

31. The method according to claim 18 or 19, further comprising a blanching step.

32. The method according to claim 31, wherein the blanching is started within 4 hours after the end of the curing.

33. Frozen broccoli comprising a total pectin content of 11.0 mass% or more on a dry basis.

34. The frozen broccoli according to claim 33, wherein a broccoli as a raw material has a total pectin content of less than 11.0 mass% on a dry basis.

35. The frozen broccoli according to claim 33, wherein a broccoli as a raw material is broccoli harvested on a harvest date on which a mean of average temperatures for 4 days before harvest including the harvest date is 20°C or lower.

36. The frozen broccoli according to claim 33, wherein a broccoli as a raw material is broccoli harvested on a harvest date on which a mean of minimum temperatures for 4 days before harvest including the harvest date is 18°C or lower.

37. The frozen broccoli according to claim 33, wherein a broccoli as a raw material is broccoli harvested in October, November, December, January, February, March, April, or May in Japan.

## INTERNATIONAL SEARCH REPORT

| International application No. |
|---|
| **PCT/JP2024/027542** |

| A. | CLASSIFICATION OF SUBJECT MATTER |
|---|---|

*A23B 7/04*(2006.01)i; *A23B 7/055*(2006.01)i; *A23L 19/00*(2016.01)i
FI:  A23B7/04; A23B7/055; A23L19/00 Z

According to International Patent Classification (IPC) or to both national classification and IPC

| B. | FIELDS SEARCHED |
|---|---|

Minimum documentation searched (classification system followed by classification symbols)

A23B7/00-9/34; A23L19/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/MEDLINE/EMBASE/BIOSIS (STN)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2008-271934 A (KIRENE KK) 13 November 2008 (2008-11-13) | 1-3, 7-19, 23-32 |
|  | claims 1, 2, paragraphs [0002]-[0005], [0008], [0012], [0015] | |
| Y | | 4-6, 20-22, 33-37 |
| Y | 波部一平, 土井香織, MA包装貯蔵を主体としたブロッコリーの鮮度保持, 長崎農林技セ研報, 2011, no. 2, pp. 97-117, (HABE, Ippei. DOI, Kaori. The freshness maintenance of the broccoli mainly composed of Modified Atomosphere storage. Bulletin of the Nagasaki Agricultural & Forestry Technical Development Center.) | 4-6, 20-22 |
|  | p. 101, right column, last paragraph | |
| Y | TAKAHASHI, M. et al. Enlarging Broccoli (Brassica oleracea L. var. italica) Heads by Extending the Growing Period and Sparse Planting to Increase Floret Yield. THE HORTICULTURE JOURNAL. 2021, vol. 90, no. 1, pp. 75-84 | 33-37 |
|  | in particular, Results | |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 October 2024** | **22 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT

International application No.

**PCT/JP2024/027542**

| C. | DOCUMENTS CONSIDERED TO BE RELEVANT | |
|---|---|---|
| Category* | Citation of document, with indication, where appropriate, of the relevant passages | Relevant to claim No. |
| Y | XIN, Y., et al. Ultrasound assisted immersion freezing of broccoli (Brassica oleracea L. var. botrytis L.). ULTRASONICS SONOCHEMISTRY. 2014, vol. 21, pp. 1728-1735 particularly, Materials and methods | 33-37 |
| Y | EP 0124627 A1 (FRISCO-FINDUS AG) 14 November 1984 (1984-11-14) example 2 | 33-37 |
| Y | SCHRUMPF, E. CHARLEY, H. TEXTURE OF BROCCOLI AND CARROTS COOKED BY MICROWAVE ENERGY. JOURNAL OF FOOD SCIENCE. 1975, vol. 40, pp. 1025-1029 table 3 | 33-37 |
| Y | MANSOUR, A. A. et al. Biological Evaluation of Raw and Steamed Broccoli and Cauliflower as Sources of Dietary Fibers. JOURNAL OF FOOD AND DAIRY SCIENCE. MANSOURA UNIVERSITY. 2017, vol. 8, no. 4, pp. 185-190 table 3 | 33 |

Form PCT/ISA/210 (second sheet) (July 2022)

## INTERNATIONAL SEARCH REPORT

International application No.

**PCT/JP2024/027542**

| Box No. III | Observations where unity of invention is lacking (Continuation of item 3 of first sheet) |
|---|---|

This International Searching Authority found multiple inventions in this international application, as follows:

The invention in claims 1-32 share, with the invention in claims 33-37, the common technical feature only in that each invention relates to frozen broccoli.
However, for example, the technical feature does not make a contribution over the prior art in light of the disclosure of document 1, document 4, or document 5, and thus cannot be said to be a special technical feature. Also, there are no other same or corresponding special technical features between these inventions.
Thus, claims are classified as the following two inventions.

(Invention 1) Claims 1-32    The invention relating to a method for producing frozen broccoli or frozen cauliflower, comprising a step for curing harvested broccoli or cauliflower before freezing, or, a method for improving the texture of frozen broccoli or frozen cauliflower, having a step for curing harvested broccoli or cauliflower before freezing.

(Invention 2) Claims 33-37    The invention relating to frozen broccoli having a total pectin content of 11.0 mass% or more on a dry basis.
Claims 33-37 are not dependent on claim 1. Furthermore, claims 33-37 are not substantially identical to or similarly closely related to any of the claims classified as invention 1.
Therefore, claims 33-37 cannot be classified as invention 1.

Document 1: JP 2008-271934 A (KIRENE KK) 13 November 2008 (2008-11-13), claims 1, 2, paragraphs [0002]-[0005], [0008], [0012], [0015] (Family: none)

Document 4: XIN, Y., et al. Ultrasound assisted immersion freezing of broccoli (Brassica oleracea L. var. botrytis L.). ULTRASONICS SONOCHEMISTRY. 2014, vol. 21, pp. 1728-1735, in particular, Materials and methods

Document 5: EP 0124627 A1 (FRISCO-FINDUS AG) 14 November 1984 (1984-11-14), example 2 & US 4521439 A

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (July 2022)

## INTERNATIONAL SEARCH REPORT
### Information on patent family members

International application No.

**PCT/JP2024/027542**

| Patent document cited in search report | | | Publication date (day/month/year) | Patent family member(s) | | | Publication date (day/month/year) |
|---|---|---|---|---|---|---|---|
| JP | 2008-271934 | A | 13 November 2008 | (Family: none) | | | |
| EP | 0124627 | A1 | 14 November 1984 | US | 4521439 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Ultrasound assisted immersion freezing of broccoli (Brassica oleracea L. var. botrytis L.). *Ultrasonics Sonochemistry*, September 2014, vol. 21 (5), 1728-1735
- The effect of thermal processing on sensory properties, texture attributes, and pectic changes in broccoli. *Czech Journal of Food Sciences*, 2015, vol. 33 (3), 254-260
- **CHRISTIAENS et al.** Towards a better understanding of the pectin structure-function relationship in broccoli during processing: Part I-macroscopic and molecular analyses. *Food Research International*, July 2011, vol. 44 (6), 1604-1612

- **MELTON et al.** Determination of the uronic acid content of plant cell walls using a colorimetric assay. *Current protocols in food analytical chemistry*, August 2001, E3.3.1-E3.3.4
- **MELTON et al.** Determination of the uronic acid content of plant cell walls using a colorimetric assay. *Current protocols in food analytical chemistry*, August 2001, E3.3.1-E3.3.4